# EUROPÄISCHE PATENTANMELDUNG

(11) **EP 2 244 057 A1**
(43) Veröffentlichungstag der Anmeldung: **27.10.2010**
(21) Anmeldenummer: 10004171.4
(22) Anmeldetag: 20.04.2010
(51) Int. Cl.: G01B 11/00, G01B 21/04

(54) **Verfahren und Vorrichtung zur Ermittlung der individuell optimalen Fahrradgeometrie**

(30) Priorität: 25.04.2009 DE 102009018962
(71) Anmelder: Radlabor GmbH, 79117 Freiburg (DE)
(72) Erfinder: Stapelfeldt, Björn, 79117 Freiburg (DE); Wangerin, Malte, 79106 Freiburg (DE)
(74) Vertreter: Maucher, Wolfgang

(57) **Zusammenfassung**

Die Erfindung betrifft ein Verfahren sowie eine Vorrichtung zur Ermittlung der ergonomisch optimalen Einstellung der für einen Radfahrer individuell optimalen Fahrradgeometrie. Die erfindungsgemäße Vorrichtung weist eine Vermessungseinheit zum Vermessen der Fahrradgeometrie eines Fahrrades (1) und/oder der Körpermaße eines Radfahrers mit zumindest einem optischen Marker (19) auf, der an einem Laufwagen (17) gehalten ist, welcher Laufwagen (17) an einer als X-Achse dienenden Linearführung (16) verfahrbar ist, die ihrerseits an einer als Y-Achse ausgestalteten Linearführung (14, 15) verschiebbar ist, wobei die Linearführungen (14, 15; 16) zur Bestimmung der Koordinaten eines vom optischen Marker (19) markierten Messpunktes jeweils einen Linearweggeber aufweisen (vgl. Figur).

## Beschreibung

Die Erfindung betrifft ein Verfahren sowie eine Vorrichtung zur Ermittlung der ergonomisch optimalen Einstellung der für einen Radfahrer individuell optimalen Fahrradgeometrie.
Die Erfindung befasst sich auch mit einer Vermessungseinheit, die zur Verwendung in dem eingangs erwähnten Verfahren oder der eingangs erwähnten Vorrichtung bestimmt ist.

Die Sitzposition ist ein im Radsport viel diskutiertes Problemfeld, von deren Optimierung sich Trainer und Athleten einerseits Leistungsverbesserung in unterschiedlichen Ausmaßen erhoffen, andererseits gilt eine falsche Sitzposition als mögliche Ursache für Sitzprobleme und Beschwerden am aktiven und passiven Bewegungsapparat. Die Position auf dem Rad ist die biomechanische Voraussetzung für die Pedalierbewegung und für eine optimale Kraftübertragung. Die Pedalierbewegung wiederum ist ein aufeinander abgestimmtes Zusammenspiel von Einzelbewegungen in Hüft-, Knie- und Fußgelenk. Das räumliche Muster dieser Bewegung legt die Kraftübertragung zwischen den beteiligten Muskeln und dem Pedal fest. Die Beiträge der einzelnen Gelenksysteme und damit der unterschiedlichen Muskeln werden von der Sitzposition des Fahrers auf dem Rad bestimmt. Die Sitzposition ist keinesfalls gleichzusetzen mit der Rahmengeometrie, denn nur die räumliche Anordnung von Sattel, Lenker und Pedal - gleichsam den drei Kontaktstellen zwischen Fahrer und Rad - legen fest, wie man auf dem Rad sitzt. Der Fahrradrahmen bestimmt also nicht unmittelbar die Sitzposition, sondern nur den Größen-Korridor, in dem die Position durch die Anbauteile modifiziert werden kann. Ein kleiner Rahmen mit langer Sattelstütze und Vorbau kann die gleiche Position ergeben wie ein großer Rahmen mit entsprechend kurzen Anbauteilen. Die Rahmengeometrie ist eher ausschlaggebend für die Laufruhe und das Lenkverhalten des Rades als für die Sitzposition.

Der wichtigste Kennwert ist die Sitzhöhe als der Abstand vom Sattel zum Tretlager. Sie legt fest, in welchem Winkel das Kniegelenk arbeitet und ob die Oberschenkelmuskulatur die richtige Arbeitslänge hat. Die horizontale Sattelposition als der horizontale Versatz zwischen dem vom Sattel gefällten Lot und dem Tretlager bestimmt die Position des Körperschwerpunktes zum Tretlager - Knie- und Hüftwinkel werden nur dann verändert, wenn man den Sattel horizontal verschiebt und die Sitzhöhe und die Sitzlänge dabei nicht mitverstellt werden. Die Oberkörperneigung und der Hüftwinkel ergeben sich aus dem Abstand vom Sattel zum Lenker und aus der Lenkerhöhe in Bezug zur Sattelhöhe.

Am fertigen Fahrrad ist nur die Sattelhöhe und -position tatsächlich einstellbar. Sportliche Fahrräder sind aber in unterschiedlichen Rahmenhöhen und -längen, sowie mit unterschiedlichen Lenkervorbauten verfügbar, so dass eine ergonomisch optimale Auswahl dieser Größen bei der Kaufentscheidung möglich ist. Aus der EP 0 926 054 A1 ist bereits ein Verfahren sowie eine Vorrichtung bekannt, die eine rasche und präzise Prüfung der Fahrerposition nach einer zuvor festgelegten Regel ermöglichen sollen. Zur Einstellung der Sattelhöhe und zur Auswahl der Rahmengeometrie eines Fahrrades besteht die aus EP 0 926 054 A1 vorbekannte Vorrichtung aus einem Satteladapter, der durch Schnellverschlüsse am Fahrradsattel oder an der Sattelstütze des Fahrrades festlegbar ist, aus einer über ein Hüftgelenk mittelbar oder unmittelbar an diesem Satteladapter befestigten Oberschenkelstelleinrichtung, einer Unterschenkelstelleinrichtung, einem Kniegelenk, das Oberschenkel- und Unterschenkelstelleinrichtung gelenkig verbindet, aus einem Fußmodell, das mit dem vom Kniegelenk beabstandeten Ende der Unterschenkelstelleinrichtung durch ein Fußgelenk gelenkig verbunden ist sowie aus einem Pedaladapter, der an dem Fußmodell befestigt ist und an einem Pedal des Fahrrades festlegbar ist, wobei alle Gelenke Bewegungen der Vorrichtung in derselben Ebene erlauben und wobei die Oberschenkelstelleinrichtung zur Veränderung des Abstandes zwischen Knie- und Hüftgelenk und die Unterschenkelstelleinrichtung zur Veränderung des Abstandes zwischen Knie- und Fußgelenk verstellbar ist und eine Winkelmesseinrichtung zur Messung des Kniegelenkwinkels vorgesehen ist. Die aus EP 0 926 054 A1 vorbekannte Vorrichtung erlaubt es, die Körpermaße und Gelenkanordnung eines Radfahrers individuell nachzustellen, um eine bestimmte Fahrradrahmengeometrie als individuell optimal zu erkennen. Das vorbekannte Verfahren und die dazugehörige Vorrichtung sind jedoch mit einem erheblichen Aufwand verbunden und beziehen sich nur auf die Sattelposition.

Aus der deutschen Gebrauchsmusterschrift DE 94 19 907.8 kennt man bereits eine Vorrichtung zum Vermessen eines Fahrradrahmens sowie ein Längenmesslineal. Die vorbekannte Vorrichtung weist ein Aufnahmegestell auf, das für den Fahrradrahmen mit einem oder mehreren Halterungs- und/oder Einspannmitteln sowie einem oder mehreren Messelementen versehen ist, die jeweils an die Grundform von Fahrradrahmen angepasst und/oder darauf einstellbar sind. Mit Hilfe der vorbekannten Vorrichtung lassen sich die geometrischen Eigenschaften oder Veränderungen des Fahrradrahmens veranschaulichen, - die Ermittlung der für einen bestimmten Radfahrer individuell optimalen Fahrradrahmengeometrie ist jedoch weder mit der vorbekannten Vorrichtung noch mit dem dazugehörigen Längenmesslineal und im übrigen auch nicht berührungslos möglich.

In der DE 10 2006 043 964 A1 wird bereits ein Verfahren und ein Messgerät zur Bestimmung der ergonomisch korrekten Sitzlänge beim Fahrrad vorbeschrieben. Die aus DE 10 2006 043 964 A1 vorbekannte Messvorrichtung beruht auf der Regel, dass der Winkel zwischen Wirbelsäule und den Armen des Radfahrers genau 90° betragen sollte, damit die Arme korrekt belastet sind. Dabei dient die vorbekannte Messvorrichtung der entsprechenden Armlänge und der Rückenlänge des auf einem Rad befindlichen Radfahrers. Da auch bei der vorbekannten Messvorrichtung die Position eines Radfahrers auf einem Fahrrad nachgestellt wird, ist auch der in DE 10 2006 043 964 A1 beschriebene Patentgegenstand mit einem erheblichen Aufwand verbunden und im übrigen auch nicht berührungslos möglich.

Es besteht daher die Aufgabe, ein Verfahren und eine Vorrichtung der eingangs erwähnten Art zu schaffen, mit der sich die für einen Radfahrer individuell optimale Fahrradgeometrie mit vergleichsweise geringem Aufwand und vorzugsweise berührungslos ermitteln und einstellen lässt.

Die erfindungsgemäße Lösung dieser Aufgabe besteht bei dem Verfahren der eingangs erwähnten Art in den Merkmalen des geltenden Anspruchs 1.

Gemäß dem erfindungsgemäßen Verfahren werden in einem ersten Verfahrensschritt zunächst die an den festgelegten Messpunkten eines Fahrrades in einem zumindest zweiachsigen Koordinatensystem ermittelten Koordinaten gespeichert, um diese Koordinaten anschließend als Ist-Werte mit den für einen Radfahrer als individuell optimale Koordinaten eines Fahrrades hinterlegten Soll-Werten abzugleichen.

Dabei können durch diesen Abgleich die Differenzwerte zwischen den Ist-Werten und den zugeordneten Soll-Werten ermittelt werden. Diese Differenzwerte erlauben den Umbau oder die Verstellung des vermassten Fahrrades entsprechend einer ergonomisch optimalen Einstellung.

Um die vorhandene Fahrradgeometrie vermessen und um die zur Durchführung des erfindungsgemäßen Verfahrens notwendigen Daten erfassen zu können, wird eine erfindungsgemäße Vermessungseinheit gemäß dem geltenden Nebenanspruch 3 vorgeschlagen.

Die erfindungsgemäße Vermessungseinheit weist einen optischen Marker auf, der an einem Laufwagen gehalten ist, welcher Laufwagen an einer als X- oder Y-Achse dienenden Linearführung verfahrbar ist, die ihrerseits an einer als Y- oder X-Achse ausgestalteten Linearführung verschiebbar ist, wobei die Linearführungen zur Bestimmung der Koordinaten eines vom optischen Marker markierten Messpunktes jeweils einen Linearweggeber aufweisen.

Sobald der an dem Laufwagen befindliche optische Marker auf einen der Messpunkte am Fahrrad und/oder am Radfahrer ausgerichtet wurde, werden die Koordinaten des in dieser Position verfahrenen Laufwagens erfasst und abgespeichert.

Dabei sieht eine bevorzugte Ausführungsform gemäß der Erfindung vor, dass die Vermessungseinheit eine elektronische Speichereinheit aufweist, in der die von den Linearweggebern ermittelten Koordinaten zumindest eines Messpunktes abspeicherbar sind. Um den im X-Y-Koordinatensystem verfahrbaren Laufwagen auf einfache Weise an einem der Messpunkte berührungslos ausrichten zu können, ist es vorteilhaft, wenn der optische Marker ein Laserpointer ist.

Die erfindungsgemäße Vermessungseinheit lässt sich an jedem beliebigen Ort, beispielsweise auch in einem Fahrradladen, vorteilhaft einsetzen, wenn die Linearführungen ein selbsttragendes Gestell bilden, wenn die als Y-Achse dienende Linearführung zwei voneinander beabstandete sowie vorzugsweise vertikal orientierte Führungsschienen aufweist, an denen eine als X-Achse ausgestaltete und insbesondere horizontal orientierte Führungsschiene verfahrbar ist und wenn an der als X-Achse ausgestalteten Führungsschiene der Laufwagen verschieblich geführt ist.

Um die Koordinaten festlegen und abspeichern zu können, wenn der Laufwagen auf einen der erforderlichen Messpunkte ausgerichtet ist, sieht eine bevorzugte Ausführungsform gemäß der Erfindung vor, dass am Laufwagen zumindest ein mit der Speichereinheit in Steuerverbindung stehendes Betätigungselement vorgesehen ist, dass bei Betätigung ein Abspeichern der der Relativposition des Laufwagens entsprechenden X-Y-Koordinaten in der Speichereinheit veranlasst.

Für eine insbesondere zur Durchführung des eingangs erwähnten Verfahrens bestimmte Vorrichtung besteht eine erfindungsgemäße Lösung in den Merkmalen des geltenden Patentanspruchs 8. Die erfindungsgemäße Vorrichtung weist über die oben beschriebene Vermessungseinheit hinaus auch eine Datenverarbeitungseinheit zum Abgleich der mittels der Vermessungseinheit an einem Fahrrad als Ist-Werte ermittelten Messpunkte mit den für einen Radfahrer als individuell optimale Koordinaten eines Fahrrades in der Datenverarbeitungsanlage hinterlegten Soll-Werten auf.

Dabei sieht eine bevorzugte Ausführungsform gemäß der Erfindung, die einen Umbau oder ein Verstellen des Fahrrades in die als individuell optimal zu bezeichnenden Soll-Werte erleichtert, vor, dass der in der Datenverarbeitungsanlage vorgenommene Datenabgleich in Form einer Differenzwertermittlung zwischen den Ist-Werten und den zugeordneten Soll-Werten anzeigbar ist.

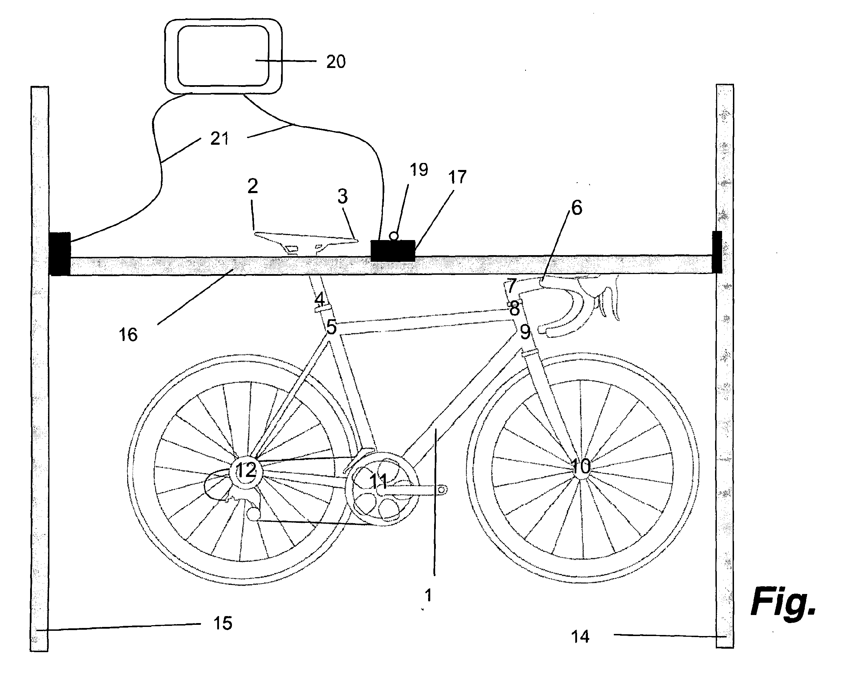

Weitere Merkmale der Erfindung ergeben sich aus der folgenden Beschreibung eines erfindungsgemäßen Ausführungsbeispieles in Verbindung mit den Ansprüchen sowie der Zeichnung.

In der einzigen Figur ist eine Vorrichtung zur Ermittlung der ergonomisch optimalen Einstellung der für einen Radfahrer individuell optimalen Fahrradgeometrie in einer schematischen Darstellung gezeigt. Die vorbekannte Vorrichtung weist eine Vermessungseinheit auf, die zum Vermessen der Fahrradgeometrie eines Fahrrades und/oder der Körpermaße eines Radfahrers bestimmt ist. Die Vermessungseinheit hat einen optischen Marker 19, der an einem Laufwagen 17 gehalten ist. Der Laufwagen 17 ist an einer als X-Achse dienenden Linearführung 16 verfahrbar, die ihrerseits an einer als Y-Achse ausgestalteten Linearführung verschiebbar geführt ist.

Es versteht sich, dass auch eine um 90° gedrehte Ausführungsform denkbar ist, bei welcher der Laufwagen 17 an einer als Y-Achse dienenden Linearführung verfahrbar ist, die ihrerseits an einer als X-Achse ausgestalteten Linearführung verschiebbar geführt ist.

Um den Laufwagen 17 auf einen der festgelegten Messpunkte am Fahrrad und/oder am Radfahrer berührungslos ausrichten zu können, ist der optische Marker 19 hier als Laserpointer ausgebildet. Zur Bestimmung der Koordinaten eines vom optischen Marker 19 markierten Messpunktes weist jede Linearführung einen Linearweggeber auf.

Die hier dargestellte Vorrichtung hat darüber hinaus auch eine Datenverarbeitungsanlage 20, die zumindest eine Speichereinheit umfasst, in der die von den Linearweggebern ermittelten Koordinaten zumindest eines Messpunktes abspeicherbar sind. Die Datenverarbeitungsanlage 20 ist zum Abgleich der mittels der Vermessungseinheit an einem Fahrrad als Ist-Werte ermittelten Messpunkte mit den für einen Radfahrer als individuell optimale Koordinaten eines Fahrrades in der Datenverarbeitungsanlage 20 hinterlegten Soll-Werten bestimmt. Die Datenverarbeitungsanlage 20 weist einen Bildschirm oder dergleichen Datenausgabe auf, auf der der in der Datenverarbeitungsanlage 20 vorgenommene Datenabgleich in Form einer Differenzwertermittlung zwischen den Ist-Werten und den zugeordneten Soll-Werten anzeigbar ist.

In der Figur ist zu erkennen, dass die Linearführungen ein selbsttragendes Gestell bilden. Dabei weist die als Y-Achse dienende Linearführung zwei voneinander beabstandete sowie vertikal orientierte Führungsschienen 14, 15 auf, an denen die als X-Achse ausgestaltete und insbesondere horizontal orientierte Führungsschiene 16 verfahrbar ist. An der als X-Achse ausgestalteten Führungsschiene 16 ist der Laufwagen 17 geführt.

Es versteht sich, dass die Datenverarbeitungsanlage 20 mit dem Laufwagen 17 drahtlos, zum Beispiel über eine Funkverbindung, oder aber auch - wie hier - über eine Kabelverbindung 21 in Steuerverbindung stehen kann. Am Laufwagen 17 ist zumindest ein mit der Datenverarbeitungsanlage 20 in Steuerverbindung stehendes Betätigungselement vorgesehen, dass bei Betätigung ein Abspeichern der der Relativposition des Laufwagens 17 entsprechenden X-Y-Koordinaten in der Speichereinheit der Datenverarbeitungsanlage 20 auslöst. An zumindest einer der Führungsschienen der Linearführungen ist ein Linearweggeber vorgesehen, der beispielsweise als Magnetband ausgestaltet sein - oder zur Wegermittlung - an der Führungsschiene abrollen kann. Die Linearweggeber sind hier an der Führungsschiene 15 einerseits und an der Führungsschiene 16 andererseits vorgesehen. Die an den Führungsschienen 14, 15 verschieblich geführte Linearführung 16 kann in der gewählten vertikalen Position fixiert werden, um anschließend den Laufwagen 17 entlang der Führungsschiene 16 verfahren und auf einen der Messpunkte ausrichten zu können. In der als selbsttragendes Gestell ausgestalteten Vermessungseinheit kann das Rad beliebig aufgestellt werden, wenn beispielsweise die Radnaben 10, 12 und/oder das Tretlager 11 zuerst vermessen und als Bezugspunkt genommen werden. Geeignete Messpunkte am Fahrrad 1 können beispielsweise der hintere Sattelpunkt 2, der vordere Sattelpunkt 3, das Sattelrohr-Ende 4, der Kreuzungspunkt 5 zwischen der Mitte des Oberrohes und den Durchgang zum Sitzrohr, die Lenkermitte 6, die am Steuerrohr-Vorbau vorgesehene Kreuzung 7, der Kreuzungspunkt 8 zwischen der Oberrohr-Mitte und dem Steuerrohr-Durchgang, der Kreuzungspunkt 9 zwischen der Unterrohr-Mitte und dem Steuerrohr-Durchgang, die Vorderradnabe 10, die hintere Radnabe 12 oder die Tretlager-Mitte 11 sein.

Zum Vermessen des Fahrrades 1 oder des Radfahrers werden diese vor dem Gestell positioniert, um anschließend die festgelegte Referenzpunkte mit dem optischen Marker anzufahren. Dabei werden die einzelnen Punkte am Rad 1 oder am Körper des Radfahrers berührungslos vermessen. Diese Daten werden anschließend digitalisiert und an die Datenverarbeitungsanlage 20 übermittelt, wo diese Daten anschleißend anzeigbar sind. Die ermittelten Daten werden in der Datenverarbeitungsanlage 20 von einem geeigneten Programm in Längen, Winkel usw. umgerechnet und als Ist-Daten abgespeichert. Aus den hinterlegten Körperdaten des Radfahrers werden Soll-Daten anhand eines festgelegten Algorithmus errechnet. Denkbar wäre auch, solche Soll-Daten von einem anderen Rad einzugeben, das bereits beispielsweise als optimal empfunden wird. Die Soll-Daten werden anschließend von der Datenverarbeitungsanlage 20 ausgegeben und können mit dem optischen Marker 19 im Raum angefahren und dort dargestellt werden, so dass eine Montage des Fahrrades 1 sich exakt an diesen Punkten orientieren kann.

Auf diese Weise kann die komplette Einstellung des Rades 1 individuell an den Körper eines Radfahrers angepasst werden. Mit dem hier dargestellten Gestell lassen sich sowohl Radals auch Körpermaße schnell und ohne größeren Aufwand erfassen und über eine entsprechende Verrechnung auf Basis der beispielsweise aus Studien extrahierten Berechnungs-Formeln kann direkt ein Ist-Soll-Abgleich der Sitzposition erfolgen.

## Patentansprüche

1. Verfahren zur Ermittlung der ergonomisch optimalen Einstellung der für einen Radfahrer individuell optimalen Fahrradgeometrie, bei dem in einem ersten Verfahrensschritt die an den festgelegten Messpunkten eines Fahrrades (1) in einem zumindest zweiachsigen Koordinatensystem ermittelten Koordinaten als Ist-Werte mit den für einen Radfahrer als individuell optimale Koordinaten eines Fahrrades (1) hinterlegten Soll-Werten abgeglichen werden.

2. Verfahren nach Anspruch 1, **dadurch gekennzeichnet, dass** durch den Abgleich die Differenzwerte zwischen den Ist-Werten und den zugeordneten Soll-Werten ermittelt werden.

3. Vermessungseinheit zum Vermessen der Fahrradgeometrie eines Fahrrades und/oder der Körpermaße eines Radfahrers mit zumindest einem optischen Marker (19), der an einem Laufwagen (17) gehalten ist, welcher Laufwagen (17) an einer als X- oder Y-Achse dienenden Linearführung (16) verfahrbar ist, die ihrerseits an einer als Y oder X-Achse ausgestalteten Linearführung veschiebbar ist, wobei die Linearführungen zur Bestimmung der Koordinaten eines vom optischen Marker (19) markierten Messpunktes jeweils einen Linearweggeber aufweisen.

4. Vermessungseinheit nach Anspruch 3, **dadurch gekennzeichnet, dass** die Vermessungseinheit eine elektronische Speichereinheit aufweist, in der die von den Linearweggebern ermittelten Koordinaten zumindest eines Messpunktes abspeicherbar sind.

5. Vermessungseinheit nach Anspruch 3 oder 4, **dadurch gekennzeichnet, dass** der optische Marker (19) ein Laserpointer ist.

6. Vermessungseinheit nach einem der Ansprüche 3 bis 5, **dadurch gekennzeichnet, dass** die Linearführungen ein selbsttragendes Gestell bilden, dass die als Y-Achse dienende Linearführung zwei voneinander beabstandete sowie vorzugsweise vertikal orientierte Führungsschienen (14, 15) aufweist, an denen eine als X-Achse ausgestaltete und insbesondere horizontal orientierte Führungsschiene (16) verfahrbar ist, und dass an der als X-Achse ausgestalteten Führungsschiene (16) der Laufwagen (17) verschieblich geführt ist.

7. Vermessungseinheit nach einem der Ansprüche 3 bis 6, **dadurch gekennzeichnet, dass** am Laufwagen (17) zumindest ein mit der Speichereinheit in Steuerverbindung stehendes Betätigungselement vorgesehen ist, dass bei Betätigung ein Abspeichern der der Relativposition des Laufwagens (17) entsprechenden X-Y-Koordinaten in der Speichereinheit auslöst.

8. Vorrichtung zur Ermittlung der ergonomisch optimalen Einstellung der für einen Radfahrer individuell optimalen Fahrradgeometrie, insbesondere zur Durchführung des Verfahrens nach Anspruch 1 oder 2, mit einer Vermessungseinheit nach einem der Ansprüche 3 bis 7 sowie mit einer Datenverarbeitungseinheit (20) zum Abgleich der mittels der Vermessungseinheit an einem Fahrrad (1) als Ist-Werte ermittelten Messpunkte mit den für einen Radfahrer als individuell optimale Koordinaten eines Fahrrades (1) in der Datenverarbeitungsanlage (20) hinterlegten Soll-Werten.

9. Vorrichtung nach Anspruch 8, **dadurch gekennzeichnet, dass** der in der Datenverarbeitungsanlage (20) vorgenommene Datenabgleich in Form einer Differenzwertermittlung zwischen den Ist-Werten und den zugeordneten Soll-Werten anzeigbar ist.

10. Vorrichtung nach Anspruch 9, **dadurch gekennzeichnet, dass** der Sollwert als Licht- oder Laserpunkt im Raum anzeigbar ist, der als Orientierungspunkt oder als Einstellhilfe die Einstellung einer Soll-Position erleichtert.
